# EUROPÄISCHE PATENTSCHRIFT

(11) **EP 0 753 530 B1**
(45) Veröffentlichungstag und Bekanntmachung des Hinweises auf die Patenterteilung: **04.08.1999**
(21) Anmeldenummer: 96107758.3
(22) Anmeldetag: 15.05.1996
(51) Int. Cl.: C08F 285/00, C08F 257/00, C08J 9/00

(54) **Verstärkte Kautschukdispersionen, ihre Herstellung und Verwendung**
Dispersions of strengthened rubber, their preparation and use
Dispersions de caoutchouc renforcé, leur préparation et utilisation

(30) Priorität: 14.07.1995 DE 19525736
(43) Veröffentlichungstag der Anmeldung: 15.01.1997
(73) Patentinhaber: POLYMER LATEX GmbH & Co. KG, 45764 Marl (DE)
(72) Erfinder: Sauer, Thomas, Dr., 45721 Haltern (DE); Eck, Wolfgang Dr., c/o Bergmann, 12205 Berlin (DE)

(56) Entgegenhaltungen:
- EP-A- 0 187 242
- EP-A- 0 364 629
- EP-A- 0 390 144
- EP-A- 0 533 442
- EP-A- 0 540 942
- EP-A- 0 545 377
- EP-A- 0 644 205
- EP-A- 0 661 296
- WO-A-86/00325
- US-A- 4 413 068
- US-A- 4 473 679
- US-A- 5 187 221

## Beschreibung

Die Erfindung betrifft wäßrige Kautschukdispersionen enthaltend mehrphasig aufgebaute, verstärkend wirkende Polymerpartikel, die zur Herstellung von vulkanisierten Latexschäumen mit verbesserten Eigenschaften verwendet werden. Insbesondere betrifft die Erfindung nach einem mehrstufigen Verfahren der Emulsionspolymerisation hergestellte Verstärkerdispersionen mit einem überwiegenden Anteil an aromatischen Monovinylverbindungen, wobei die Glasübergangstemperaturen der einzelnen Phasen der Polymerpartikel außerhalb des Temperaturbereichs liegen, in denen die daraus hergestellten Latexschäume verwendet werden.

Latexschaum wird nach dem Stand der Technik aus wäßrigen, hochkonzentrierten Kautschukdispersionen unter Zusatz schwefelvernetzender Vulkanisationsmittel durch mechanisches Einschlagen von Luft hergestellt, mittels Zusatz von Gelierungsmitteln geliert und dann in der Wärme zu einem zellartigen, weitestgehend offenporigen Schaum vulkanisiert. Die Herstellung solcher Latexschäume wird beispielsweise in der DE-OS 21 50 872 beschrieben. Die Kautschukdispersionen enthalten dabei in der Regel Verstärkerdispersionen, d.h. wäßrige Dispersionen von verstärkend wirkenden Polymerisaten. Art und Menge dieser Verstärkerkomponente beeinflussen im hohen Maße das Eigenschaftsbild des fertigen Latexschaums.

Für den Latexschaum wird eine hohe Elastizität insbesondere im Gebrauchstemperaturbereich von 20 bis 70 °C gefordert, die auch bei längerem Zusammendrücken und vor allem im Dauergebrauch nicht verloren gehen darf. Dementsprechend soll der Druckverformungsrest (compression set, nach DIN 53 572) in diesem Temperaturbereich möglichst gering sein und die Wiedererholung des zusammengedrückten Formteils möglichst schnell verlaufen, d. h. die Hysterese (nach DIN 53 577) soll ebenfalls möglichst gering sein. Weiterhin soll die Zugfestigkeit und die maximale Dehnung bis zum Bruch (nach DIN 53 571) möglichst hoch sein. Ebenso soll bei vorgegebener Eindruckhärte (nach DIN 53 576) des Schaums dessen Dichte möglichst niedrig sein, um die Schaumartikel im Hinblick auf die erforderliche Einsatzmenge von Kautschukdispersionen möglichst wirtschaftlich herstellen zu können.

Verstärkende Polymerisate in Form ihrer wäßriger Dispersionen sind für die gezielte Erhöhung von Härte, Festigkeit und Dehnung von Latexschaum seit langem bekannt. Diese sind in der Regel Styrol-Butadien-Dispersionen mit einem hohen Styrolgehalt bis hin zu 100 %. Homogen aufgebaute, d. h. in einem einzigen Verfahrensschritt hergestellte Verstärkerdispersionen werden bereits in der DE-OS 10 56 364 als unvorteilhaft beschrieben, da sie der Forderung nach niedrigen Werten für den Druckverformungsrest über einen weiten Temperaturbereich nicht genügen. Bessere Ergebnisse erreicht man nach dieser Lehre durch Einsatz von mehrstufigen Pfropfcopolymerisat-Dispersionen mit vergleichbarer Bruttozusammensetzung, die in einem zweistufigen Batch-Verfahren hergestellt werden. Solche Kautschukdispersionen und daraus hergestellte Latexschäume zeichnen sich dadurch aus, daß die der Verstärkerkomponente zuzuordnende Glasübergangstemperatur innerhalb eines relativ schmalen Temperaturbereiches im angesprochen Intervall von 20 bis 70 °C liegt.

Eine in wesentlichen Punkten verbesserte Ausführungsform einer solchen mehrphasigen Pfropfcopolymerdispersion wird in EP 0 187 905 beschrieben. Dort wird insbesondere von semikontinuierlichen Zulaufverfahren Gebrauch gemacht, um Dispersionspartikel mit unterschiedlichen Monomerzusammensetzungen in den einzelnen Phasen gezielt herzustellen. Die auf Basis dieser Lehre hergestellten Latexschäume zeichnen sich durch eine ausgewogene Eigenschaftskombination mit insbesondere niedrigen Werten für den Druckverformungsrest im gesamten Temperaturbereich von 20 bis 70 °C aus. Die den einzelnen Phasen der Verstärkerkomponente zuzuordnenden Glasübergangstemperaturen decken nach dieser Ausführungsform und im Gegensatz zu früheren Lehren einen möglichst breiten Bereich innerhalb des angesprochen Intervalls von 20 bis 70 °C ab. Nicht völlig befriedigen kann jedoch die mäßige Sprungelastizität der nach dieser Lehre hergestellten Latexschäume, die sich in relativ hohen Hysteresewerten äußert.

Es stellte sich daher die Aufgabe, Verstärkerdispersionen für aufschäumbare Kautschukdispersionen bereitzustellen, mit Hilfe derer Latexschäume hergestellt werden können, die eine über den Stand der Technik hinausgehende verbesserte Eigenschaftskombination und insbesondere niedrigere Hysteresewerte aufweisen.

Gegenstand der Erfindung sind wäßrige, hochkonzentrierte Kautschukdispersionen, enthaltend eine mehrphasige, verstärkend wirkende Polymerdispersion aus 60 bis 95 Gew.-% aromatischen Monovinylverbindungen und 40 bis 5 Gew.-% aliphatischen konjugierten Dienen mit 4 bis 9 Kohlenstoffatomen, wobei die Partikel der verstärkend wirkenden Komponente aus
a) 20 bis 75 Gew.-% einer harten inneren Phase mit einer Glasübergangstemperatur oberhalb 70 °C, bestehend aus 90 bis 100 Gew.-% aromatischen Monovinylverbindungen und 10 bis 0 Gew.-% aliphatischen konjugierten Dienen mit 4 bis 9 Kohlenstoffatomen,
b) 78 bis 15 Gew.-% einer weichen äußeren Phase mit einer Glasübergangstemperatur unterhalb 20 °C, bestehend aus 30 bis 70 Gew.-% aromatischen Monovinylverbindungen und 70 bis 30 Gew.-% aliphatischen konjugierten Dienen mit 4 bis 9 Kohlenstoffatomen, sowie
c) 2 bis 10 Gew.-% Übergangsbereichen zwischen diesen Phasen, die in ihrer Copolymerzusammensetzung zwischen denen der harten und der weichen Phasen liegen,
bestehen.

Die wäßrigen, hochkonzentrierten Kautschukdispersionen, die als verstärkende Komponente geeignete Verstärkerdispersionen enthalten, bestehen aus mehrphasig aufgebauten Polymerpartikeln aus harten und weichen Phasen von Copolymeren unterschiedlicher Zusammensetzung sowie Übergangsbereichen zwischen diesen Phasen. 'Hart' und 'weich' beziehen sich dabei auf die Lage der jeweiligen dynamischen Glasübergangstemperatur relativ zur üblichen Raumtemperatur. Methoden zur Bestimmung der dynamischen Glasübergangstemperatur von Elastomeren sind dem Fachmann geläufig; ihre Lage kann beispielsweise aus dem Meßergebnis der Torsionsschwingungsanalyse nach DIN 53 520 ermittelt werden. Die Bruttozusammensetzung der erfindungsgemäßen, verstärkend wirkenden Polymerdispersionen besteht aus 60 bis 95 Gew.-% aromatischen Monovinylverbindungen und 40 bis 5 Gew.-% aliphatischen konjugierten Dienen mit 4 bis 9 Kohlenstoffatomen. Vorzugsweise wird eine Zusammensetzung von 70 bis 95 Gew.-% einer aromatischen Monovinylverbindung und 30 bis 5 Gew.-% eines aliphatischen konjugierten Diens mit 4 bis 9 Kohlenstoffatomen angestrebt. Die Monomerzusammensetzungen der einzelnen Phasen weichen jedoch stark von dieser Bruttozusammensetzung ab.

Aromatische Monovinylverbindungen im Sinne der Erfindung sind Monomere der allgemeinen Form CH₂=CR₁R₂, wobei R₁ ein aromatischer Kern mit 6 bis 10 Kohlenstoffatomen ist, der auch mit weiteren Alkylresten und/oder Halogensubstituenten versehen sein kann. R₂ ist Wasserstoff oder ein Alkylrest mit 1 bis 4 Kohlenstoffatomen. Bevorzugte aromatische Monovinylverbindungen sind aus Gründen der Wirtschaftlichkeit und Verfügbarkeit Styrol, α-Methylstyrol und Vinyltoluol, wobei Styrol besonders bevorzugt ist.

Geeignete aliphatische konjugierte Diene mit 4 bis 9 Kohlenstoffatomen sind das 1,3-Butadien sowie substituierte Butadiene wie beispielsweise das 2-Chlor-1,3-Butadien. Ferner eignen sich konjugierte, gerad- und verzweigtkettige Pentadiene und Hexadiene sowie weitere gerad- und verzweigtkettige konjugierte Diene mit bis zu 9 Kohlenstoffatomen. Aus Gründen der Wirtschaftlichkeit und der vorteilhaften Eigenschaften in Copolymeren ist das 1,3-Butadien besonders bevorzugt.

Weitere olefinisch ungesättigte, copolymerisierbare Monomere können nach Bedarf eingesetzt werden. Bevorzugt werden jedoch im Sinne der Erfindung keine weiteren Monomeren eingesetzt. Insbesondere werden keine olefinisch ungesättigten Carbonsäuren bzw. deren Salze eingesetzt.

Die harte Phase der verstärkend wirkenden Polymerpartikel besteht aus 90 bis 100 Gew.-% aromatischen Monovinylverbindungen und 0 bis 10 Gew.-% aliphatischen konjugierten Dienen, jeweils bezogen auf die Gesamtmenge der harten Phase, wobei vorzugsweise Styrol und 1,3-Butadien als Monomere eingesetzt werden. Die Zusammensetzung der harten Phase wird so gewählt, daß die zugeordnete dynamische Glasübergangstemperatur oberhalb von 70 °C liegt. Vorzugsweise wird aber durch eine entsprechend gewählte Monomermischung eine Glasübergangstemperatur von über 90 °C angestrebt. Am meisten bevorzugt ist jedoch eine harte Phase aus reinem Styrol. Der Anteil der harten Phase am Gesamtpolymerisat beträgt zwischen 20 und 75 Gew.-%, bevorzugt zwischen 40 und 65 Gew.-%.

Die weiche Phase besteht dementsprechend aus dem verbleibenden Gemisch an aromatischen Monovinylverbindungen und aliphatischen konjugierten Dienen, welches sich nach Abzug der in der harten Phase eingesetzten Monomeren von der Bruttozusammensetzung ergibt. Insbesondere besteht die weiche Phase jedoch aus 30 bis 70 Gew.-% aliphatischen konjugierten Dienen und 70 bis 30 Gew.-% aromatischen Monovinylverbindungen, jeweils bezogen auf die Gesamtmasse der weichen Phase. Die Zusammensetzung der weichen Phase wird dabei so gewählt, daß die zugeordnete Glasübergangstemperatur unterhalb von 20 °C liegt. Auch hier werden vorzugsweise Styrol und 1,3-Butadien als Monomere eingesetzt. Vorzugsweise wird aber durch eine entsprechend gewählte Monomermischung eine Glasübergangstemperatur von unter 0 °C angestrebt. Dementsprechend bevorzugt ist eine weiche Phase aus 40 bis 70 Gew.-% Butadien und 60 bis 30 Gew.-% Styrol, jeweils bezogen auf die Gesamtmenge der weichen Phase. Der Anteil der weichen Phase am gesamten verstärkenden Polymerisat beträgt zwischen 78 und 15 Gew.-% und bevorzugt zwischen 58 und 25 Gew.-%.

Die heterogenen Polymerpartikel der Verstärkerdispersion basieren auf einer harten, zusammenhängenden Phase, die in einem ersten Verfahrensschritt hergestellt wird. Die weiche Phase wird durch Polymerisation in einem zweiten Verfahrensschritt so auf die Oberfläche der vorzugsweise kugelförmigen Partikel der harten Phase aufgebracht, daß keine neuen Partikel entstehen. Bei dem Herstellungsverfahren entstehen somit weitestgehend nur Partikel, die sowohl harte als auch weiche Phasen enthalten. Sie enthalten ebenfalls Übergangsbereiche zwischen harten und weichen Phasen, die in der Zusammensetzung der darin enthaltenen Copolymere zwischen denen der harten und weichen Phasen liegen und die eine innige Anbindung der verschiedenen Phasen zueinander bewirken. Der Anteil der Übergangsbereiche am gesamten verstärkenden Polymerisat beträgt zwischen 2 und 10 Gew.-%.

Die harte Phase innerhalb eines Partikels kann vollständig von der weichen Phase in Form einer Schale eingeschlossen sein, oder die weiche Phase kann in Form einzelner oder mehrerer Bereiche auf der Oberfläche der harten Phase verteilt sein. Nicht erwünscht im Sinne der Erfindung ist dagegen eine Zusammensetzung der heterogenen Partikel, in der die Bereiche der weichen Phase innerhalb der harten Phase dispergiert sind. Ebensowenig ist eine Struktur angestrebt, bei der die Bereiche der harten Phase in der weichen Phase dispergiert sind.

Die Herstellung der heterogen aufgebauten Verstärkerdispersionen erfolgt über mehrstufige Verfahren der Emulsionspolymerisation in wäßriger Phase als Dispergiermedium. Zur Polymerisation der harten Phase wird die benötigte Monomermenge in einem Zulaufverfahren zugegeben und in der wäßrigen Phase unter fortwährendem kräftigem Rühren emulgiert. Entsprechende Mengen Initiator und Emulgator werden ebenso in einem Zulaufverfahren zugegeben, um die Emulsionspolymerisation in Gang zu bringen. Monomer und Emulgator können im gleichen Sinne auch als wäßrige Emulsion zugegeben werden. Alternativ dazu kann ein Teil der entsprechenden Monomeren mit einem darauf abgestimmten Anteil an Initiator und Emulgator vorgelegt und in einer Batchreaktion polymerisiert werden. Die restlichen Mengen an Monomer, Emulgator und Initiator für die harte Phase werden dann im Anschluß im Zulauf zudosiert. Die Mengen an Initiator, Emulgator und Monomer sind dabei so zueinander abzustimmen, daß die mittleren Partikeldurchmesser der harten Phase zwischen 80 und 150 nm und bevorzugt zwischen 100 und 130 nm liegen.

Die Reaktion zur Herstellung der harten Phase wird durch geeignete Wahl von Reaktionstemperatur, -dauer und Zulaufzeiten so geführt, daß der Monomerumsatz am Ende dieser Reaktion mindestens 90 % und bevorzugt mehr als 95 %, aber nicht mehr als 98 % beträgt. Durch diesen nicht vollständigen Umsatz verbleibt restliches Monomer aus der harten Phase, das zusammen mit den anschließend zugegebenen Monomeren der weichen Phase zu einer Übergangsphase polymerisiert, die eine gute Anbindung zwischen harter und weicher Phase gewährleistet.

Die Zugabe der Monomeren der weichen Phase wird dabei bezüglich Menge und Dosiergeschwindigkeit so gestaltet, daß der Anteil der entstandenen Übergangsbereiche zumindest 2 Gew.-%, aber höchsten 10 Gew.-% am Gesamtpolymerisat beträgt. Insbesondere soll die Übergangsphase nicht so ausgeprägt sein, daß sie bei der Bestimmung der Glasübergangstemperaturen des verstärkenden Polymerisats als separate Phase auftritt.

Die Monomeren für die weiche Phase werden komplett oder in einzelnen Chargen zu dem Latex der harten Phase zugegeben oder in einer bevorzugten Ausführungsform in einem Zulaufverfahren zudosiert. Die bis zu diesem Punkt noch nicht verbrauchten Mengen an Initiator und Emulgator werden ebenfalls bevorzugt in einem semikontinuierlichen Zulauf derart zugegeben, daß während dieses Zulaufs keine Bildung von neuen Partikeln stattfindet. Es wird vielmehr darauf abgezielt, daß die vorliegenden Partikel der harten Phase weiter wachsen, bis zu einem mittleren Durchmesser von 100 bis 250 nm. Die Reaktionsführung während der Polymerisation der weichen Phase wird derart gestaltet, daß der Gesamtumsatz der Monomeren am Ende der Polymerisation mindestens 95 % beträgt, bevorzugt aber mehr als 98 %.

Zur Stabilisierung der erfindungsgemäßen Verstärkerdispersionen werden die üblichen Fettseifen und/oder Harzseifen eingesetzt, die zu Dispersionen mit erhöhtem ph-Wert zwischen 8 und 11 führen. Entsprechend der Alkalinität dieser Emulgatoren findet auch die Polymerisation bei diesen pH-Werten statt. Der Gehalt an Emulgator beträgt zwischen 0,5 und 10 Gew.-% bezogen auf die Gesamtmenge der Monomeren, bevorzugt zwischen 2 und 5 Gew.-%.

Zur Polymerisation werden, bezogen auf die Gesamtmenge der Monomeren, 0,05 bis 2 Gew.-% radikalbildende Initiatoren eingesetzt. Dazu eignen sich öl- und/oder wasserlösliche Azoinitiatoren, Peroxide, Hydroperoxide und Peroxodisulfate. Bei der Polymerisation bei höheren Temperaturen werden bevorzugt Peroxodisulfate eingesetzt. Wird dagegen bei tiefer Temperatur polymerisiert, werden bevorzugt Peroxide und Hydroperoxide in Kombination mit einem Reduktionsmittel eingesetzt. Als Reduktionsmittel eigenen sich beispielsweise Natriumbisulfit, Ascorbinsäure und Natriumformaldehydsulfoxylat, bevorzugt auch in Kombination mit einem Eisen(II)-Salz. Die Polymerisationstemperatur beträgt je nach Initiatorsystem 0 bis 90 °C, bevorzugt 60 bis 85 °C bei Verwendung eines Peroxodisulfats als Initiator und bevorzugt zwischen 10 und 70 °C bei Verwendung eines Redox-Initiatorsystems.

Weiterhin können Kettenüberträger zur Regelung des Molekulargewichts und des Vernetzungsgrades eingesetzt werden. Bevorzugt sind insbesondere aliphatische, gerad- oder verzweigtkettige Mercaptane in einer Menge von 0,1 bis 2 Gew.-% bezogen auf die Gesamtmenge der Monomeren.

Der Feststoffgehalt der erfindungsgemäßen Verstärkerdispersionen beträgt zwischen 30 und 70 Gew.-%, vorzugsweise zwischen 40 und 60 Gew.-%. Die mittlere Partikeldurchmesser der Verstärkerdispersionen soll am Ende der Polymerisation 100 bis 250 nm betragen, bevorzugt 140 bis 250 nm.

Die erfindungsgemäßen Verstärkerdispersionen werden einer Kautschukdispersion zugemischt. Die Kautschukdispersion kann dabei ein Naturlatex, eine Styrol-Butadien-Synthesekautschuklatex (SBR-Latex) oder ein Gemisch von beiden sein. Geeignete SBR-Dispersionen haben dabei dem Fachmann geläufige Maßnahmen zur Agglomeration der Kautschukteilchen durchlaufen. Der Gehalt an verstärkendem Polymerisat bezogen auf den Gesamtfeststoffgehalt der Abmischung beträgt zwischen 5 und 30 Gew.-% und richtet sich nach dem gewünschten Härteniveau des herzustellenden Latexschaums. Das Gemisch aus Verstärker- und Kautschukdispersion wird danach auf Feststoffgehalte von über 60 Gew.-% aufkonzentriert.

Dieser Schaumlatex wird dann mit den üblichen Verarbeitungshilfsmitteln sowie weiteren Additiven verschäumt und vulkanisiert. Als weitere Additive können insbesondere weitere Stabilisatoren wie Fett- und/oder Harzseifen, Alterungs- und Lichtschutzmittel, Verdickungsmittel sowie organische und/oder anorganische Füllstoffe (beispielsweise Kreide oder Stärke) zugesetzt werden. Solche Schäume eignen sich vorteilhafterweise zur Rückenbeschichtung von textilen Bodenbelägen sowie zur Herstellung von Schaumformartikeln aller Art und insbesondere zur Herstellung von Latexmatratzen. In diesen Artikeln zeigt der Schaum aus den erfindungsgemäßen Dispersionen bei guter Härte, Festigkeit und Dehnung einen weitestgehend temperaturunabhängigen Druckverformungsrest auf niedrigem Niveau sowie niedrige Hysteresewerte. Gegenüber den im Stand der Technik beschriebenen Verstärkerdispersionen können 10 bis 15 % weniger von der erfindungsgemäßen Verstärkerdispersionen eingesetzt werden, um bei gleicher Schaumdichte zu gleichwertigen Artikeln und Beschichtungen zu kommen, wodurch der wirtschaftliche Nutzen dieser Dispersionen weiter gesteigert wird.

Die Erfindung wird durch die folgenden Beispiele weiter erläutert. Die angegebenen Teile beziehen sich jeweils auf das Gewicht.

### Beispiel 1:

### Herstellung einer erfindungsgemäßen Verstärkerdispersion, einer verstärkten Kautschukdispersion sowie daraus gefertigten Schaumformteilen

Im einem druckfesten Polymerisationsreaktor wird eine Emulsion aus 84 Teilen vollentsalztem Wasser, 0,2 Teilen Kaliumoleat, 0,1 Teil Kaliumcarbonat, 0,0015 Teile des Tetranatriumsalzes der Ethylendiamintetracarbonsäure, 20 Teile Styrol und 0,1 Teil Ammoniumperoxodisulfat hergestellt und 2 Stunden unter kräftigem Rühren auf 80 °C erhitzt. Zu dieser Vorlage werden folgende Ströme zudosiert:
1: Gemisch aus 36 Teilen Styrol und 0,09 Teilen tert.-Dodecylmercaptan (Zulaufzeit 2 Stunden)
2: Gemisch aus 0,15 Teilen Ammoniumperoxodisulfat und 5,9 Teilen vollentsalztem Wasser (Zulaufzeit 6,5 Stunden)
3: Gemisch aus 4 Teilen Kaliumoleat und 18,9 Teilen vollentsalztem Wasser (Zulaufzeit 5,5 Stunden)
4: Gemisch aus 22 Teilen Styrol, 22 Teilen 1,3-Butadien und 0,06 Teilen tert.-Dodecylmercaptan (Zulaufzeit 3 Stunden)

Die Ströme 1 bis 3 werden gleichzeitig gestartet. Nach Ende des Stroms 1 wird die Umsetzung 0,5 Stunden weitergeführt. Der bis dahin erhaltene Latex hat einen Umsatz von ca. 98 % und einen mittleren Partikeldurchmesser von 120 nm. Anschließend wird Strom 4 gestartet. Nach Beendigung der Polymerisation wird ein Latex mit einem Feststoffgehalt von rund 50 Gew.-% und einem mittleren Partikeldurchmesser von 150 nm erhalten.

Die Herstellung einer Synthesekautschukdispersion mit ca. 25 Gew.-% Styrol und 75 Gew.-% 1,3-Butadien erfolgt in Anlehnung an DE 26 45 082, Beispiel 1. Diese Dispersion wird anschließend nach dem Verfahren gemäß DE 12 13 984 agglomeriert, von Restmonomeren befreit, mit 19 Teilen Verstärkerdispersion auf 100 Teile Kautschukdispersion (jeweils bezogen auf den Feststoff in der jeweiligen Dispersion) vermischt und anschließend aufkonzentriert. Man erhält eine verstärkte Kautschukdispersion mit einem Feststoffgehalt von 67,9 Gew.-% und einer Brookfield-Viskosität von 1770 mPas.

Zu der verstärkten Kautschukdispersion werden, jeweils bezogen auf 100 Teile Dispersionsfeststoff, 0,75 Teile Kaliumoleat (als 17,5 %ige wäßrige Lösung) und 0,25 Teile Carboxymethylcellulose (als 2,5 %ige wäßrige Lösung) sowie ein Vulkanisationssystem bestehend aus
2 Teile Schwefel
1 Teil Zinkdiethyldithiocarbamat
1 Teil Zink-2-mercaptobenzthiazol
1 Teil Diphenylguanidin
3 Teile Zinkoxid
1 Teil Antioxidans
als 50 %ige wäßrige Dispersion zugegeben. Diese vulkanisierbare Masse wird in einem Schaummischer mit Luft zu einem Naßschaum verschäumt, mit 2 Teilen Natriumsilikofluorid (als 25 %ige wäßrige Dispersion) versetzt und in eine Form gegossen. Die Gelierung und Vulkanisation wird im Dampf bei 100 °C innerhalb 30 Minuten durchgeführt. Der erhaltene Latexschaum wird anschließend gewaschen und 16 Stunden bei 75 °C getrocknet und zeigt bei einer Härte von 270 ±10 N und einer Dichte von 100 g/l folgende Meßwerte:

### Druckverformungsrest nach DIN 53 572

| | |
|---|---|
| 72 Stunden bei 25°C | 4,9 % |
| 22 Stunden bei 50°C | 5,4 % |
| Hysterese nach DIN 53 577 | 25,6 % |

Die der Verstärkerkomponente zuzuordnenden dynamischen Glasübergangstemperaturen liegen laut Torsionsschwingungsanalyse (nach DIN 53 520) bei 21 °C und 96 °C.

### Vergleichsbeispiel:

### Herstellung einer Verstärkerdispersion gemäß dem Stand der Technik, einer damit verstärkten Kautschukdispersion sowie daraus gefertigten Schaumformteilen

Gemäß der Lehre von EP 0 187 905, Beispiel 1, wird ein Pfropfcopolymer-Verstärkerlatex mit einer Bruttozusammensetzung von 80 Teilen Styrol und 20 Teilen Butadien bei einer Polymerisationstemperatur von 80 °C hergestellt. Nach Beendigung der Polymerisation wird ein Latex mit einem Feststoffgehalt von rund 50 Gew.-% und einem mittleren Partikeldurchmesser von 155 nm erhalten.

23 Teile dieser Verstärkerdispersion werden mit 100 Teilen einer Kautschukdispersion (jeweils bezogen auf den Feststoff in der jeweiligen Dispersion) gemäß Beispiel 1 vermischt und anschließend aufkonzentriert. Man erhält eine verstärkte Kautschukdispersion mit einem Feststoffgehalt von 68,5 Gew.-% und einer Brookfield-Viskosität von 1700 mPas.

Aus dieser verstärkten Kautschukdispersion werden gemäß Beispiel 1 Schaumformteile mit gleicher Härte und Dichte hergestellt, die folgende Meßwerte zeigen:

### Druckverformungsrest nach DIN 53 572

| | |
|---|---|
| 72 Stunden bei 25°C | 7,7 % |
| 22 Stunden bei 50°C | 10,9 % |
| Hysterese nach DIN 53 577 | 36,8 % |

Die der Verstärkerkomponente zuzuordnenden dynamischen Glasübergangstemperaturen liegen laut Torsionsschwingungsanalyse (nach DIN 53 520) bei 28 °C und 67 °C.

Der Vergleich der Beispiele zeigt das eindeutig bessere Werteniveau der erfindungsgemäß verstärkten Kautschukdispersionen.

## Patentansprüche

1. Wäßrige, hochkonzentrierte Kautschukdispersionen, enthaltend eine mehrphasige, verstärkend wirkende Polymerdispersion aus 60 bis 95 Gew.-% aromatischen Monovinylverbindungen und 40 bis 5 Gew.-% aliphatischen konjugierten Dienen mit 4 bis 9 Kohlenstoffatomen, wobei die Partikel der verstärkend wirkenden Komponente aus
a) 20 bis 75 Gew.-% einer harten inneren Phase mit einer Glasübergangstemperatur oberhalb 70 °C, bestehend aus 90 bis 100 Gew.-% aromatischen Monovinylverbindungen und 10 bis 0 Gew.-% aliphatischen konjugierten Dienen mit 4 bis 9 Kohlenstoffatomen,
b) 78 bis 15 Gew.-% einer weichen äußeren Phase mit einer Glasübergangstemperatur unterhalb 20 °C, bestehend aus 30 bis 70 Gew.-% aromatischen Monovinylverbindungen und 70 bis 30 Gew.-% aliphatischen konjugierten Dienen mit 4 bis 9 Kohlenstoffatomen, sowie
c) 2 bis 10 Gew.-% Übergangsbereichen zwischen diesen Phasen, die in ihrer Copolymerzusammensetzung zwischen denen der harten und der weichen Phasen liegen,
bestehen.

2. Wäßrige Kautschukdispersionen gemäß Anspruch 1,
dadurch gekennzeichnet,
daß die Glasübergangstemperatur der harten Phase der verstärkenden Polymerdispersion oberhalb 90 °C und die Glasübergangstemperatur der weichen Phase der verstärkenden Polymerdispersion unterhalb 0 °C liegt.

3. Wäßrige Kautschukdispersionen gemäß den Ansprüchen 1 oder 2,
dadurch gekennzeichnet,
daß die aromatische Monovinylverbindung in der verstärkenden Polymerdispersion Styrol und das aliphatische konjugierte Dien 1,3-Butadien ist.

4. Wäßrige Kautschukdispersionen gemäß den Ansprüchen 1 bis 3,
dadurch gekennzeichnet,
daß die innere harte Phase der verstärkenden Polymerdispersion aus reinem Polystyrol besteht.

5. Verfahren zur Herstellung einer wäßrigen Kautschukdispersionen gemäß den Ansprüchen 1 bis 4,
dadurch gekennzeichnet, daß
a) zunächst die harte innere Phase in wäßriger Emulsion zu Partikeln mit mittleren Durchmessern zwischen 80 und 150 nm und einem Monomerenumsatz von 90 bis 98 % polymerisiert wird,
b) danach mit einem Teil der Monomeren der weichen äußeren Phase auf den Partikeln der harten Phase Übergangsbereiche geschaffen werden, die in ihrer Copolymerzusammensetzung zwischen denen der harten und der weichen Phasen liegen, und sodann
c) die weiche äußere Phase solcherart zu Partikeln mit mittleren Durchmessern zwischen 100 und 250 nm auf die gemäß Schritt a) und b) hergestellten Partikel aufpolymerisiert wird, daß dabei keine neuen, separaten Partikel der weichen Phase gebildet werden.

6. Verfahren gemäß dem Anspruch 5,
dadurch gekennzeichnet,
daß die Polymerisation der verstärkenden Polymerdispersionen ganz oder teilweise nach einem semikontinuierlichen Zulaufverfahren erfolgt.

7. Durch Vulkanisation in der Wärme erhaltene Latexschäume und Schaumformartikel, hergestellt durch Verschäumen von Kautschukdispersionen gemäß den Ansprüchen 1 bis 4, die gemäß den Ansprüchen 5 und 6 hergestellt wurden.

## Claims

1. An aqueous, highly concentrated rubber dispersion, containing a reinforcing multiphase polymer dispersion comprising 60 to 95% by weight of aromatic monovinyl compounds and 40 to 5% by weight of aliphatic conjugated dienes having 4 to 9 carbon atoms, the particles of the reinforcing component comprising
a) 20 to 75% by weight of a hard inner phase having a glass transition temperature above 70°C, comprising 90 to 100% by weight of aromatic monovinyl compounds and 10 to 0% by weight of aliphatic conjugated dienes having 4 to 9 carbon atoms,
b) 78 to 15% by weight of a soft outer phase having a glass transition temperature below 20°C, comprising 30 to 70% by weight of aromatic monovinyl compounds and 70 to 30% by weight of aliphatic conjugated dienes having 4 to 9 carbon atoms, and
c) 2 to 10% by weight of transition regions between these phases, whose copolymer compositions are between those of the hard and of the soft phases.

2. An aqueous rubber dispersion according to claim 1, characterized in that the glass transition temperature of the hard phase of the reinforcing polymer dispersion is above 90°C and the glass transition temperature of the soft phase of the reinforcing polymer dispersion is below 0°C.

3. An aqueous rubber dispersion according to either of claims 1 and 2, characterized in that the aromatic monovinyl compound in the reinforcing polymer dispersion is styrene and the aliphatic conjugated diene is 1,3-butadiene.

4. An aqueous rubber dispersion according to any of claims 1 to 3, characterized in that the inner hard phase of the reinforcing polymer dispersion comprises pure polystyrene.

5. A process for the preparation of an aqueous rubber dispersion according to any of claims 1 to 4, characterized in that
a) first, the hard inner phase is polymerized in aqueous emulsion to give particles having mean diameters of from 80 to 150 nm and a monomer conversion of 90 to 98%,
b) then transition regions whose copolymer compositions are between those of the hard and of the soft phases are produced with a part of the monomers of the soft outer phase on the particles of the hard phase, and then
c) the soft outer phase is polymerized onto the particles prepared according to steps a) and b) to give particles having mean diameters of from 100 to 250 nm, in such a way that no new, separate particles of the soft phase are formed.

6. A process according to claim 5, characterized in that the polymerization of the reinforcing polymer dispersions is carried out wholly or partly by a semi-continuous feed process.

7. A latex foam or shaped foam article obtained by vulcanization at elevated temperature and prepared by expansion of rubber dispersions according to any of claims 1 to 4, which were prepared according to either of claims 5 and 6.

## Revendications

1. Dispersions aqueuses de caoutchouc, hautement concentrées, contenant une dispersion de polymère à plusieurs phases, à action de renforcement, à base de 60 à 95 % en poids de composés monovinyliques aromatiques, et de 40 à 5 % en poids de diènes conjugués aliphatiques ayant de 4 à 9 atomes de carbone, pour lesquelles les particules de composant à action renforçatrice consistent :
a) pour 20 à 75 % en poids d'une phase interne dure ayant une température de transition vitreuse au dessus de 70°C consistant en 90 à 100 % en poids de composants monovinyliques aromatiques et en 10 à 0 % en poids de diènes conjugués aliphatiques ayant de 4 à 9 atomes de carbone,
b) pour 78 à 15 % en poids d'une phase extérieure souple ayant une température de transition vitreuse en dessous de 20°C, consistant en 30 à 70 % en poids de composés monovinyliques aromatiques, et en 70 à 30 % en poids de diènes conjugués aliphatiques, ayant de 4 à 9 atomes de carbone, ainsi que
c) pour 2 à 10 % en poids de zones de transition entre ces deux phases que se situent dans leur composition de polymère entre celle de la phase dure et de la phase souple.

2. Dispersions aqueuses de caoutchouc conformément à la revendication 1,
caractérisées en ce que
la température de transition vitreuse de la phase dure de la dispersion de polymère renforçatrice se situe au dessus de 90°C et la température de transition vitreuse de la phase souple de la dispersion de polymère renforçatrice se situe en dessous de 0°C.

3. Dispersions aqueuses de caoutchouc conformément aux revendications 1 ou 2,
caractérisées en ce que
le composé monovinylique aromatique dans la dispersion de polymère renforçatrice est le styrène et le diène conjugué aliphatique est le 1,3-butadiène.

4. Dispersions aqueuses de caoutchouc conformément aux revendications 1 à 3,
caractérisées en ce que
la phase interne dure de la dispersion de polymère renforçatrice consiste en du polystyrène pur.

5. Procédé de préparation de dispersions aqueuses de caoutchouc, conformément aux revendications 1 à 4,
caractérisé en ce que
a) en premier lieu la phase interne dure en émulsion aqueuse, est polymérisée en particules ayant des diamètres moyens compris entre 80 et 150 nm et un taux de conversion du monomère allant de 90 à 98 %,
b) ensuite on crée avec une partie des monomères de la phase externe souple, des zones de transition sur les particules de la phase dure qui se situent dans leur composition de polymère entre celle de la phase dure et celle de la phase souple, et ensuite
c) on polymérise sur les particules obtenues conformément aux étapes a) et b) en particules ayant des diamètres moyens compris entre 100 et 250 nm, la phase externe souple de telle sorte qu'ainsi aucune particule nouvelle séparée de la phase souple ne soit formée.

6. Procédé conformément à la revendication 5,
caractérisé en ce que
la polymérisation des dispersions de polymère renforçatrices s'effectue totalement ou partiellement selon un processus d'amenée en semi-contenu.

7. Articles en mousse de latex et sous forme de mousse obtenus par vulcanisation à chaud, préparés par conversion en mousse de dispersions de caoutchouc conformément aux revendications 1 à 4, qui ont été préparés conformément aux revendications 5 et 6.
